(19) Europäisches Patentamt
European Patent Office
Office européen des brevets

(11) EP 3 617 766 A1

(12) EUROPÄISCHE PATENTANMELDUNG

(43) Veröffentlichungstag:
04.03.2020 Patentblatt 2020/10

(51) Int Cl.:
G02B 7/08 (2006.01)     G02B 7/09 (2006.01)

(21) Anmeldenummer: 19189945.9

(22) Anmeldetag: 05.08.2019

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR

(30) Priorität: 27.08.2018 DE 102018120807

(71) Anmelder: SICK AG
79183 Waldkirch (DE)

(72) Erfinder:
• Schneider, Dr. Florian
79276 Reute (DE)
• Schäfer, Georg
79106 Freiburg (DE)
• Pontiggia, Tobias
79215 Elzach (DE)

(54) FOKUSVERSTELLBARE OPTIK

(57) Es wird eine fokusverstellbare Optik (28) für einen optoelektronischen Sensor (10) mit mindestens einem optischen Element (14), einem Aktuator (34) zum Bewegen des optischen Elements (14) und einem Schwenkarm (30) angegeben, an dem das optische Element (14) angeordnet ist und an dem der Aktuator (34) angreift, um den Schwenkarm (30) mit dem optischen Element (14) gegen einen Lagerpunkt (32) zu bewegen.

Dabei ist der Schwenkarm (30) als zweiseitiger Hebel mit einem ersten Hebelarm zu der einen Seite und einem zweiten Hebelarm zu der anderen Seite des Lagerpunkts (32) ausgebildet, dass das optische Element (14) an dem ersten Hebelarm und der Aktuator (34) an dem zweiten Hebelarm angeordnet und der Schwenkarm (30) ausbalanciert ist.

Figur 4

EP 3 617 766 A1

**Beschreibung**

Die Erfindung betrifft eine fokusverstellbare Optik für einen optoelektronischen Sensor sowie ein Verfahren zur Fokusverstellung einer Optik eines optoelektronischen Sensors nach dem Oberbegriff von Anspruch 1 beziehungsweise 10.

Die Fokussierung oder umgangssprachlich das Scharfstellen einer Optik ist eine Aufgabenstellung, die für eine sehr große Gruppe von optoelektronischen Sensoren relevant ist. Das betrifft sowohl die Sendeseite, wenn ein Lichtstrahl ausgesandt oder ein Lichtmuster projiziert werden soll, als auch die Empfangsseite für die Erfassung von Lichtstrahlen oder sogar Bildern. Ein Beispiel für eine sendeseitige Fokussierung ist ein Barcodescanner mit fokussiertem Lesestrahl und für eine empfangsseitige Fokussierung eine Kamera zur fokussierten Aufnahme von Bildern und insbesondere zum Lesen von Barcodes oder 2D-Codes, ohne damit andere optoelektronische Sensoren mit Fokusverstellung auszuschließen. Wie das weitere Beispiel einer 3D-Kamera mit projiziertem Beleuchtungsmuster zeigt, besteht auch Bedarf an sowohl sende- wie empfangsseitiger Fokussierung.

Derartige Sensoren finden ihre Anwendung unter anderem in der Logistik- und Fabrikautomation. Eine häufige Erfassungssituation ist die Montage des Sensors über einem Förderband. Während der Relativbewegung des Objektstroms auf dem Förderband erfasst der Sensor Informationen der Objekte, beispielsweise durch Vermessen der Objekte oder Lesen daran angebrachter Codes

Ein fixer Schärfentiefenbereich reicht in vielen Situationen nicht aus, um einen scharfen Lichtfleck zu erzeugen beziehungsweise ein scharfes Bild aufzunehmen und Codes zuverlässig zu lesen. Dann wird eine Fokusverstellung eingesetzt, um den Sendelichtstrahl beziehungsweise die empfangsseitige Schärfenebene auf den benötigten Arbeitsabstand einzustellen. Oft wird das mit einem Autofokus verbunden, bei dem der Abstand zu dem aufzunehmenden Objekt bestimmt und die Fokuslage entsprechend eingestellt wird. Für die Fokusverstellung gibt es unterschiedliche Technologien. Typischerweise wird die Position der Optik relativ zu Lichtsender beziehungsweise Lichtempfänger verändert.

Diese Bewegung lässt sich durch einen Schrittmotor antreiben. Beispielsweise erzeugt der Schrittmotor über einen Exzenter und einen Schwenkhebel eine über die jeweilige Schrittposition definierte Auf- und Abbewegung einer Sendelinse, die über eine Blattfeder gelagert ist. Jede Schrittposition des Schrittmotors ist somit einem spezifischen Abstand zwischen Sendelinse und Laserdiode zugeordnet, welche einer Fokussierung des Laserstahls auf den entsprechenden Fokuswert entspricht. Dies ist aber mit recht hohen Kosten verbunden, und der Schrittmotor beansprucht viel Bauraum. Die EP 2 498 113 A1 schlägt für einen kamerabasierten Codeleser eine Fokusverstellung mit Hilfe einer motorgetriebenen Kurvenscheibe und einer Parallelführung des Objektivs in einer Federlagerung vor, die mehrere flache Blattfedern aufweist. Die Nachteile hinsichtlich Aufwand und Bauraum werden dadurch nicht beseitigt.

Alternativ zu einem Schrittmotor werden auch Tauchspulen eingesetzt. Deren Wirkungsprinzip basiert auf der Lorentzkraft, die auf eine stromdurchflossene Spule in einem Magnetfeld ausgeübt wird. Die DE 10 2016 112 123 A1 offenbart einen Barcodescanner mit einer Sendeoptik auf einem Schwenkarm, der zum Fokussieren des Lesestrahls mit einem Tauchspul-Aktor verschwenkt wird. Dabei ist der Schwenkarm an seinem einen Ende gelagert und wird am anderen Ende durch den Tauchspul-Aktor bewegt. Damit kann nur eine untersetzende Bewegung der Optik erzielt werden, in welcher also der Aktor sich weiter bewegt als die Optik. Tauchspulen-Aktoren sind üblicherweise frei beziehungsweise an dünnen Biegebalken aufgehängt, was zu einer hohen mechanischen Schockempfindlichkeit führt.

Die EP 1 513 094 B1, EP 1 698 995 B1 und EP 1 698 996 B1 beschreiben jeweils einen Codeleser, bei dem ein Spiegel auf einem Schwenkarm angeordnet ist, durch dessen Bewegung sich der Lichtweg zwischen Linse und Empfangsoptik verkürzt oder verlängert, um die effektive Fokuslage einzustellen. Die Verlagerung des Spiegels bewirkt aber auch eine Lageänderung der optischen Achse, so dass dies für eine sendeseitige Verwendung in einem Codescanner nicht geeignet ist. Die reflexive Optik ist auch nicht für alle Bauformen geeignet.

Die EP 2 112 540 B1 offenbart einen stationären kamerabasierten Codeleser mit einer Kamerazeile, deren erfasste Bildzeilen sukzessive im Laufe einer Förderbewegung zu einem Gesamtbild zusammengesetzt werden. Eine Empfangsoptik ist auf einer Schwinge angeordnet, die für Fokusverstellungen parallel zur Bildzeile verschwenkt wird. Dadurch spielt die zwangsläufig mit der Verschwenkung einhergehende Verschiebung des Erfassungsbereichs keine Rolle, da lediglich die einzelnen Zeilen einen gewissen gegenseitigen Versatz erhalten. Mit den Feinheiten der Aktuierung und Auslegung der Fokusverstellung sowie der Fokussierung eines Sendestrahls in einem Codescanner befasst sich die EP 2 112 540 B1 nicht.

In der EP 2 657 881 A1 wird eine Beleuchtungsvorrichtung mit einem Optikhalter vorgestellt, der eine Sendeoptik gegen einen Lichtsender bewegt und so den Beleuchtungsbereich auf einen Arbeitsabstand fokussiert. Der Optikhalter ist an einem Fixpunkt festgelegt, und dadurch wird die Bewegung zwangsgeführt. Der Fixpunkt befindet sich auch in diesem Fall an einem Ende des Optikhalters. Wie die Bewegung konkret erzeugt wird, lässt die EP 2 657 881 A1 offen.

Es ist daher Aufgabe der Erfindung, eine verbesserte Fokusverstellung in einem Codeleser zu erreichen.

Diese Aufgabe wird durch eine fokusverstellbare Optik für einen optoelektronischen Sensor sowie ein Verfahren zur Fokusverstellung einer Optik eines optoelektronischen Sensors nach Anspruch 1 beziehungsweise 10 gelöst. Die Optik weist mindestens ein optisches Element wie eine Linse auf, das von einem Aktuator bewegt wird. Diese Bewegung erfolgt mittelbar über einen Schwenkarm, an dem das optische Element angeordnet ist und an dem der Aktuator angreift, um den Schwenkarm gegen einen Lagerpunkt zu bewegen.

Die Erfindung geht von dem Grundgedanken aus, den Schwenkarm wie eine Wippe als zweiseitigen Hebel auszugestalten. Der Lagerpunkt befindet sich nicht an einem Ende des Schwenkarms, sondern in der Mitte bei gleich langen Hebelarmen oder längs des Schwenkarms zur Mitte versetzt bei ungleichen Hebelarmen. Das optische Element ist an einem ersten Hebelarm angeordnet, während der Aktuator auf den anderen, zweiten Hebelarm einwirkt. Indem der Aktuator seinen Hebelarm auf und ab bewegt, verändert sich der Arbeitsabstand des optischen Elements auf dem gegenüberliegenden Hebelarm und damit die Fokuslage. Das durch die Länge der Hebelarme definierte Hebelverhältnis dimensioniert die Positionsgenauigkeit, also den Über- oder Untersetzungsfaktor, mit dem sich Bewegungen des Aktuators auf das optische Element übertragen.

Erfindungsgemäß ist der Schwenkarm ausgewuchtet, befindet sich also in Balance bezüglich des Lagerpunktes. Technisch ausgedrückt bedeutet dies, dass das Drehmoment von dem ersten Hebelarm samt daran angeordnetem optischem Element gleich dem Drehmoment des zweiten Hebelarms samt denjenigen Elementen des Aktuators ist, die den zweiten Hebelarm belasten.

Die Erfindung hat den Vorteil, dass die Empfindlichkeit gegenüber Vibrationen oder mechanischem Schock deutlich reduziert wird. Die bessere Stabilität sorgt dann wiederum für eine verlässlichere Fokussierung.

Der Schwenkarm ist bevorzugt durch Auswahl und Anordnung von Schwenkarm, optischem Element und Aktuator ausbalanciert. In dieser Ausführungsform sorgt das Design der fokusverstellbaren Optik für die Balance. Der Schwenkarm selbst, dessen Lagerpunkt, das optische Element und der Aktuator sowie deren Anordnung an dem Schwenkarm werden dafür aufeinander abgestimmt, um das gewünschte Gleichgewicht zu erhalten. Damit fällt der Aufwand nur einmalig im Vorfeld an, nicht mehr bei der Fertigung der jeweiligen Optiken.

Alternativ ist der Schwenkarm durch Hinzufügen oder Entfernen von Material oder gezieltes Verschieben des Lagerpunktes, der Position von optischem Element und/oder Aktuator bezüglich des Schwenkarms ausbalanciert. Dies sind Maßnahmen zum individuellen Auswuchten einer Optik beispielsweise im Produktionsprozess, die auch ein grundsätzlich schon balanciertes Design noch weiter verfeinern können. Eine denkbare Maßnahme besteht darin, die Angriffspunkte am Hebel zu verändern, also den Lagerpunkt und/oder die Positionen von optischem Element beziehungsweise Aktuator bezüglich des Schwenkarms. Eine weitere denkbare Maßnahme wirkt auf die Massen ein, indem gezielt Material des Schwenkarms abgetragen oder besonders bevorzugt Zusatzgewichte daran angebracht werden, um ihn analog zum Auszuwuchten eines Reifens auszubalancieren.

Zwischen Aktuator und zweitem Hebelarm ist vorzugsweise eine freie Aufhängung vorgesehen. Die freie Aufhängung weist beispielsweise nur einen dünnen Biegebalken auf und jedenfalls nichts, das den Schwenkarm festhält.

Der Aktuator ist bevorzugt als Tauchspulaktuator ausgebildet. Eine Tauchspulaktorik ist frei aufgehängt wie im Vorabsatz beschrieben und kann so nicht selbst für Robustheit gegen Schwingungen bei Vibration oder Schock sorgen. Daher ist der erfindungsgemäß ausbalancierte Schwenkarm für eine derartige Aktorik ganz besonders gut geeignet. Fokusverstellungen auf Basis von Schrittmotoren würden dagegen schon selbst eine geringere Schockempfindlichkeit zeigen, die aber auch durch ein Ausbalancieren verbessert werden kann.

Der Tauchspulaktuator weist vorzugsweise eine an dem zweiten Hebelarm befestigte Spule und einen feststehenden Permanentmagneten auf, in dessen Magnetfeld die Spule angeordnet ist. Feststehend bedeutet, dass der Permanentmagnet der Fixpunkt für die Schwenkbewegung ist, d. h. in dem Sensor ruht, welcher die fokusverstellbare Optik nutzt. Ein geeignet gesteuerter Stromfluss durch die Spule erzeugt eine Lorentzkraft, um die angesteuerte Fokusposition einzunehmen. Der Permanentmagnet erzeugt bevorzugt ein homogenes Magnetfeld. Das sorgt für eine lineare Verstellung und eine hohe Effizienz der ausgeübten Kraft.

Die fokusverstellbare Optik weist bevorzugt einen Positionssensor auf, um die jeweilige Auslenkung des optischen Elements zu bestimmen. Der Positionssensor ist beispielsweise ein Hallsensor. Damit wird eine Rückmeldung gewonnen, ob eine durch Ansteuerung des Aktuators gewünschte Fokuslage tatsächlich eingenommen wird. Der Positionssensor kann die Auslenkung des Schwenkarms an beliebiger Stelle bestimmen, weil dies sich dann anhand der bekannten Geometrie für das optische Element umrechnen lässt. Vorzugsweise befindet sich aber der Positionssensor in genügend Abstand zum Lagepunkt, um ausreichende Auslenkung zu erfahren, und nochmals bevorzugt in der Nähe des optischen Elements, um noch genauere Positionsinformationen zu erfassen.

Die fokusverstellbare Optik weist bevorzugt eine Regelung auf, um anhand einer Positionsinformation des Positionssensors die Fokuslage des optischen Elements zu regeln. Damit lassen sich Abweichungen zwischen gewünschter und tatsächlicher Fokuslage ausgleichen. Außerdem wird das optische Element im Falle von äußeren Einwirkungen wie Vibration oder Schock rasch in die gewünschte Fokuslage zurückgeführt.

Der Schwenkarm ist bevorzugt derart gelagert und bezüglich des Aktuators angeordnet, dass die Schwenkbewegung senkrecht zu der Längserstreckung des Schwenkarms erfolgt. Dabei ist insbesondere eine an dem Schwenkarm angebrachte Spule so im Magnetfeld angeordnet, dass eine senkrechte und damit für die Fokusverstellung besonders wirksame senkrechte Schwenkbewegung bewirkt wird. Der Schwenkarm ist bevorzugt an dem Lagerpunkt mittels einer Blattfeder gelagert. Eine solche Blattfeder ist günstig und stabil, und sie kann die Schwenkbewegung ohne Weiteres aufnehmen.

In vorteilhafter Weiterbildung ist ein Sensor mit einem Lichtempfänger und einer erfindungsgemäßen fokusverstellbaren Optik als Empfangsoptik und/oder mit einem Lichtsender und einer erfindungsgemäßen fokusverstellbaren Optik als Sendeoptik vorgesehen. Dadurch wird ein scharfer Lichtfleck beziehungsweise ein scharfes Bild aufgenommen beziehungsweise ein scharfer Lichtfleck beziehungsweise ein scharfes Lichtmuster in einer Szenerie erzeugt. Besonders bevorzugt ist der Sensor ein Codeleser. Das kann insbesondere ein kamerabasierter Codeleser mit einer erfindungsgemäßen fokusverstellbaren Optik für deren Bildsensor zur Aufnahme scharfer Bilder mit anschließender Bildverarbeitung zum Lokalisieren und Lesen von Codes oder ein Codescanner sein, dessen Lesestrahl durch eine erfindungsgemäße fokusverstellbare Optik einen scharfen Lichtfleck auf dem Code erzeugt. Die fokusverstellbare Optik kann zusammen mit einer Abstandsmessung als Autofokus genutzt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine vereinfachte Blockdarstellung eines optoelektronischen Sensors mit einer sendeseitigen Fokusverstellung, die einen als zweiseitiger Hebel ausgebildeten Schwenkarm und eine Tauchspuleneinheit aufweist;

Fig. 2    eine Darstellung einer Tauchspuleneinheit mit Permanentmagnet und dessen Magnetfeld sowie einer darin eingetauchten stromführenden Spule;

Fig. 3    eine schematische Darstellung einer Fokusverstellung mit zweiseitigem Hebel und Schrittmotor;

Fig. 4    eine schematische Darstellung einer Fokusverstellung mit zweiseitigem Hebel und Tauchspuleneinheit;

Fig. 5    eine Skizze der Verhältnisse an einem zweiseitigen Hebel in einer Nulllage;

Fig. 6    eine Skizze der Verhältnisse an einem zweiseitigen Hebel in einer ausgelenkten Lage;

Fig. 7    eine schematische Darstellung des Auswuchtens eines zweiseitigen Hebels für eine Fokusverstellung; und

Fig. 8    eine vergleichende Darstellung der Auslenkungen einer ausgewuchteten und einer nicht ausgewuchteten Fokusverstellung in einem Schocktest.

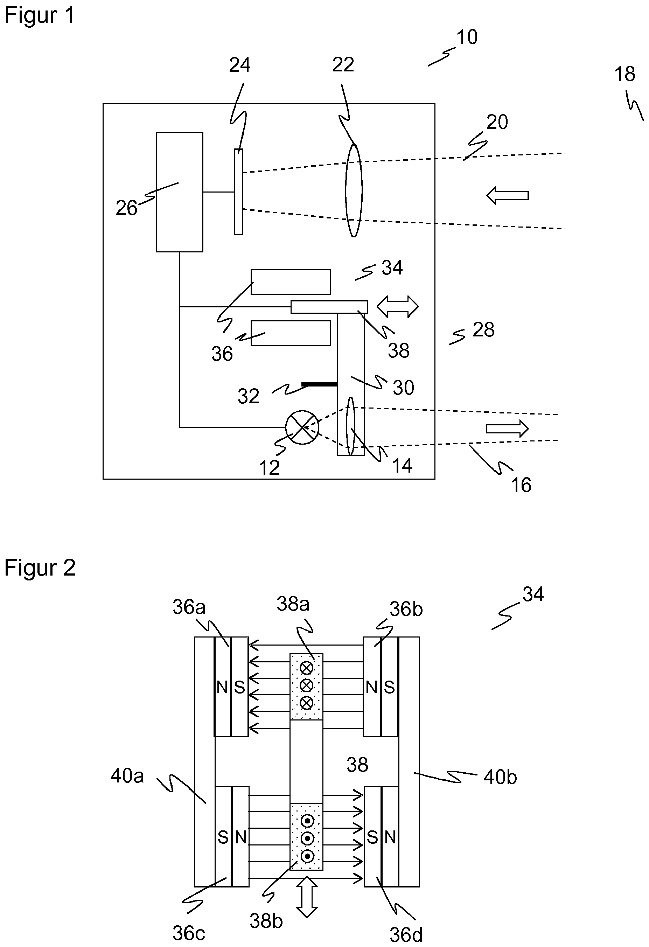

Figur 1 zeigt eine vereinfachte Blockdarstellung eines optoelektronischen Sensors 10. Ein Lichtsender 12, beispielsweise mit einer LED oder einem Laser als Lichtquelle, erzeugt über eine Sendeoptik 14 Sendelicht 16, das in einen Erfassungsbereich 18 ausgesandt wird. Die Sendeoptik 14 ist beispielhaft als einfache Linse gezeigt. Alternativ sind mehrere Linsen eines Objektivs denkbar, ebenso wie zusätzliche optische Elemente in Form von Blenden, Filtern und dergleichen. Auch eine reflexive Anordnung mit mindestens einem gekrümmten Spiegel oder ein Hybrid aus refraktiven und reflexiven Elementen ist möglich.

Trifft das Sendelicht 16 auf ein Objekt in dem Erfassungsbereich 18, so kehrt reflektiertes oder remittiertes Empfangslicht 20 zu dem Sensor 10 zurück und wird über eine Empfangsoptik 22 auf einen Lichtempfänger 24 geführt. Dort wird aus dem auftreffenden Licht des remittierten Empfangslichts 20 ein Empfangssignal erzeugt und einer Auswertungseinheit 26 zugeführt. Die Auswertungseinheit 26 ist auch zu dessen Steuerung mit dem Lichtsender 12 verbunden.

Um den Tiefenschärfenbereich der Sendeoptik 14 zu verändern beziehungsweise den von dem Sendelicht 16 erzeugten Lichtfleck in einem bestimmten Abstand zu fokussieren, ist die Sendeoptik 14 als fokusverstellbare Optik 28 ausgebildet. Obwohl denkbar ist, die fokusverstellbare Optik 28 für die Einstellung auf einen festen oder parametrierten Abstand zu nutzen, wird vorzugsweise der jeweilige aktuelle Abstand zu einem von dem Sendelicht 16 angetasteten Objekt gemessen. Das kann durch eine zusätzliche, nicht dargestellte Entfernungsmesseinheit geschehen. In einer bevorzugten Ausführungsform wird das Sendelicht 16 selbst für eine Entfernungsmessung genutzt, indem beispielsweise durch Amplitudenmodulation eine Frequenz auf das Sendelicht 16 aufgeprägt und der Abstand in einem Phasenverfahren aus dem Phasenversatz zwischen Sende- und Empfangszeitpunkt bestimmt wird.

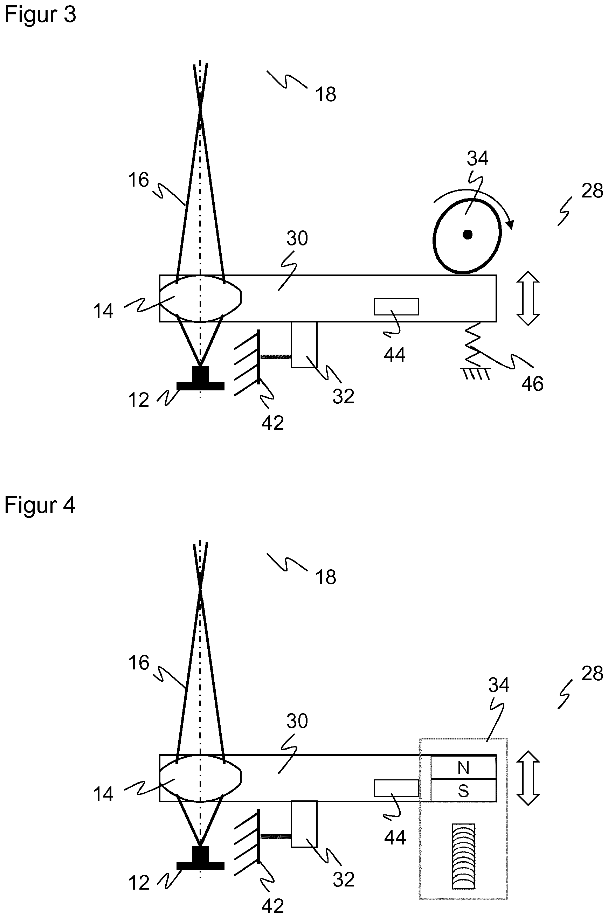

Die fokusverstellbare Optik 28 wird später unter Bezugnahme auf die Figuren 3 bis 8 genauer erläutert. In grober Beschreibung weist sie einen Schwenkarm 30 auf, der wie eine Wippe auf einem Lagerpunkt 32 auf seiner Längsseite gelagert ist. Der Schwenkarm 30 haltert auf der einen Seite die Sendeoptik 14 und wird auf der anderen Seite durch einen Tauchspul-Aktuator 34 auf und ab bewegt, der einen feststehenden Permanentmagneten 36 und eine stromdurchflossene Spule 38 auf dem Schwenkarm 30 aufweist, die in dessen Magnetfeld eintaucht.

Bewegungen des Schwenkarms sorgen für eine Abstandsänderung zwischen Lichtsender 12 und Sendeoptik 14 und damit eine Fokusverstellung. Das jeweilige Ausmaß der Schwenkbewegung oder Auslenkung des Schwenkarms 30 kann durch Stromfluss durch die Spule 38 von der Auswertungseinheit 26 gesteuert werden. Dazu ist beispielsweise eine Fokustabelle hinterlegt, welche die benötigten Ansteuerungen mit gemessenen Entfernungen oder anderweitig festgelegten einzustellenden Fokuslagen verknüpft. Das Übersetzungsverhältnis zwischen Bewegungen an dem Tauchspul-Aktuator 34 und Bewegungen der Sendeoptik 14 ist bekannt und durch die Geometrie des Schwenkarms 30 sowie die Anordnung der Sendeoptik 14 auf dem Schwenkarm 30, des Lagerpunktes 32 und des Angriffspunktes der Verstellkraft an der Spule 38 vorgegeben.

Der Sensor 10 in Figur 1 ist nur sehr schematisch dargestellt und steht stellvertretend für zahlreiche optoelektronische Sensoren. Dementsprechend kann der konkrete Aufbau des Sensors 10 deutlich abweichen, denn die Erfindung betrifft die fokusverstellbare Optik 28. Ein Beispiel ist ein Codescanner, bei dem ein nicht gezeigter Scanmechanismus beispielsweise mit einem Schwing- oder Drehspiegel das Sendelicht 16 als Lesestrahl über den Codebereich bewegt. Tastet der Lesestrahl beispielsweise einen Barcode ab, so wird das Empfangssignal in den Codebalken entsprechender Weise in seiner Amplitude moduliert. Die Auswertungseinheit 26 ist deshalb in der Lage, die Codeinformation auszulesen. Sie erkennt auch, wenn das Empfangssignal keinem Code entspricht. Das Auffinden von Codebereichen und das Auslesen der Codeinformation ist an sich bekannt und wird daher nicht näher erläutert.

Die sendeseitig erläuterte fokusverstellbare Optik 28 kann genauso auch empfangsseitig verwendet werden, beispielsweise in einem kamerabasierten Codeleser statt in einem Codescanner.

Figur 2 zeigt einen beispielhaften Aufbau des Tauchspul-Aktuators 34 mit durch Pfeile angedeutetem Magnetfeld des Permanentmagneten 36 und der darin eingetauchten Spule 38. Der Permanentmagnet 36 weist vorzugsweise zwei Magnetpaare 36a-b und 36c-d auf, die zwischen einander jeweils ein homogenes Magnetfeld erzeugen und worin sich jeweils eine Hälfte 38a-b der Spule 38 befindet. Das obere Magnetpaar 36a-b und das untere Magnetpaar 36c-d sind dabei entgegengesetzt polarisiert, wobei dies einfach durch umgekehrte Anordnung erreichbar ist. Denn der Strom in der oberen Hälfte 38a der Spule 38 fließt aufgrund der Wicklungen und Anordnung in umgekehrter Richtung als in der unteren Hälfte 38b. Durch die unterschiedliche Polarisierung der Magnetpaare 36a-b, 36c-d wird erreicht, dass die Lorentzkraft auf beide Hälften 38a-b der Spule 38 gleichgerichtet ist. Beide Magnetpaare 36a-b, 36c-d sind jeweils mit einem Rückschluss 40a-b verbunden, um den magnetischen Kreis zu schließen.

Figur 3 zeigt eine schematische Darstellung der fokusverstellbaren Optik 28. Der Schwenkarm 30 ist durch Lagerung nicht an einem Ende, sondern an seiner Längsseite als zweiseitiger Hebel oder wie eine Wippe ausgebildet. An der Lagerung an dem Lagerpunkt 32 ist eine Blattfeder 42 angeordnet. Die Sendeoptik 14 ist links von dem Lagerpunkt 32 auf dem einen Hebelarm und der Aktuator 34 rechts auf dem anderen Hebelarm angeordnet. Über die Hebelverhältnisse kann die Positionsgenauigkeit der Sendeoptik 14 und damit der Fokuslage dimensioniert werden. Ein optionaler Positionssensor 44 bestimmt die jeweilige Auslenkung, beispielsweise um die aktuelle Fokuslage zu kontrollieren beziehungsweise nachzuregeln. Weiterhin steht die Sendeoptik 14 beispielhaft auch für eine fokusverstellbare Empfangsoptik 22 in einem anderen Sensoraufbau als in Figur 1.

Erfindungsgemäß ist der Schwenkarm 30 ausbalanciert, um für mehr Robustheit gegenüber Schock und Vibrationen zu sorgen. Im Beispiel der Figur 3 ist als Aktuator 34 ein Schrittmotor mit Kurvenscheibe anstelle einer Tauchspuleneinheit vorgesehen. Dabei kann unterhalb des Schrittmotors eine vorgespannte Feder 46 verwendet werden, die bereits weitgehend für die Robustheit sorgt, so dass ein Ausbalancieren nur ergänzend beiträgt.

Figur 4 zeigt eine schematische Darstellung der fokusverstellbaren Optik 28 ähnlich Figur 3, jedoch nun mit Tauchspul-Aktuator 34. Dessen freie Aufhängung beispielsweise über dünne Biegebalken macht die fokusverstellbare Optik 28 wesentlich empfindlicher gegenüber Schock und Vibrationen. Deshalb führt in diesem Fall das Ausbalancieren des Schwenkarms 30 zu einem ganz erheblich robusteren Verhalten.

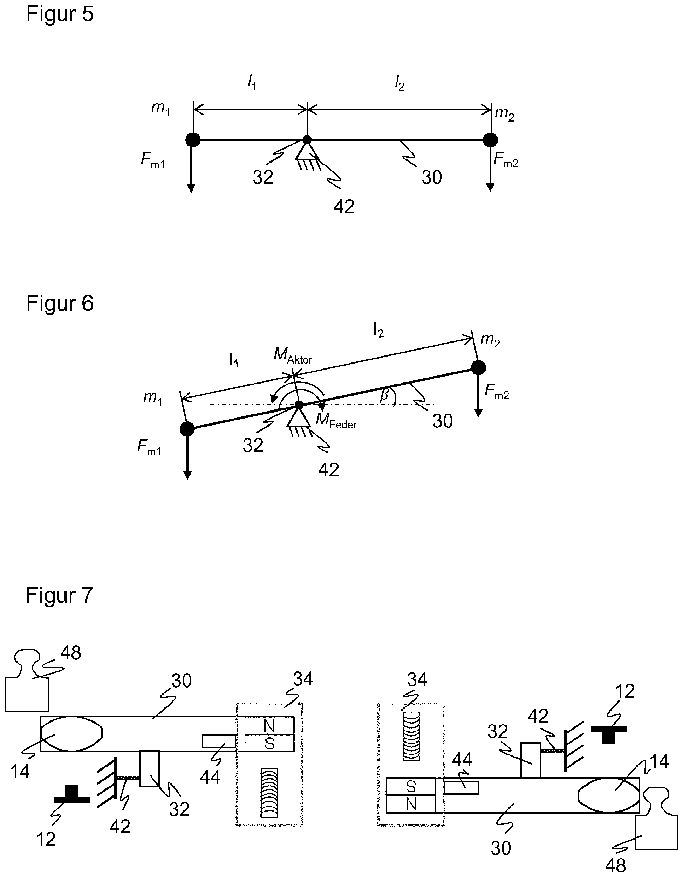

Die Figuren 5 und 6 sind Skizzen der abstrahierten Kraft- und Drehmomentverhältnisse an einem zweiseitigen Hebel, also an dem Schwenkarm 30, und zwar in Figur 5 für eine Nulllage und in Figur 6 für eine ausgelenkte Lage. An den beiden Hebelarmen werden Punktmassen $m_1$, $m_2$ im Abstand $l_2$, $l_2$ zum Drehpunkt beziehungsweise Lagerpunkt 32 angenommen. Für den ausbalancierten zweiseitigen Hebel summieren sich die Dremomente $M$ zu Null. Wird ein mechanischer Schock in Form einer Beschleunigung $a$ auf das System beaufschlagt, hat dies aufgrund der Ausbalancierung im Idealfall keinen Einfluss.

In der Nulllage der Figur 5 gilt

$$\sum M = 0$$
$$a(m_1 l_1 - m_2 l_2) = 0$$
$$m_1 l_1 = m_2 l_2.$$

Mit einem Aktormoment $M_{Aktor}$ für eine ausgelenkte Lage wie in Figur 6 erzeugt die Blattfeder 42 ein Federmoment $M_{Feder}$ mit umgekehrtem Vorzeichen, und es gilt

$$\sum M = 0$$

$$\cos(\beta)\, a(m_1 l_1 - m_2 l_2) = M_{Feder} - M_{Aktor}$$

$$\text{da } m_1 l_1 = m_2 l_2$$

$$0 = M_{Feder} - M_{Aktor}.$$

Figur 7 ist eine schematische Darstellung des Auswuchtens, um den zweiseitigen Hebel auszubalancieren. In diesem Fall erfolgt das Auswuchten beispielhaft mit zusätzlichen Gewichten 48 auf der Seite der Sendeoptik 14, während der Aktuator 34 außer Betrieb ist. Die Zielgröße der Auswuchtung ist eine möglichst geringe Positionsänderung bei den unterschiedlichen Orientierungen nach oben und nach unten. Das Auswuchten kann ebenso mit Gewichten auf der gegenüberliegenden Seite oder durch Abtragen von Material durchgeführt werden. Alternativ zu einem derartigen individuellen Auswuchten etwa im Rahmen des Produktionsprozesses ist auch ein Ausbalancieren per Design vorstellbar, in dem die Bauteile und Anordnungen entsprechend aufeinander abgestimmt werden.

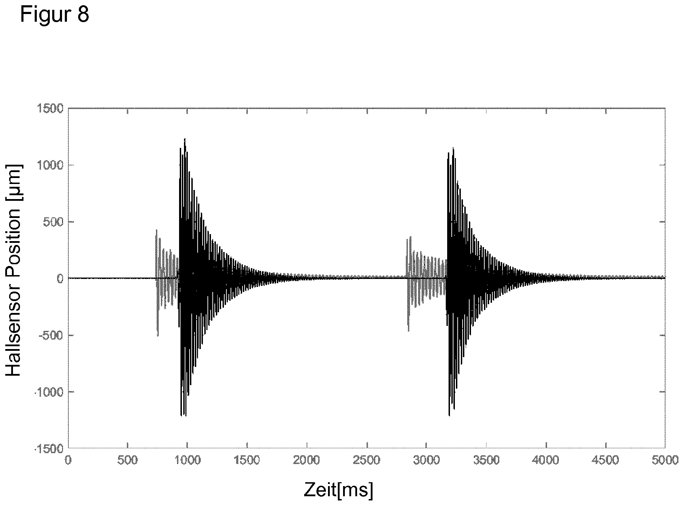

Figur 8 zeigt das Ergebnis eines experimentellen Beispiels der durch den Positionssensor 44 gemessenen zeitabhängigen Auslenkung des Schwenkarms 30 bei einem Schocktest mit zwei Schocks jeweils einer Beschleunigung von 12 m/s². Dabei entsprechen die heller dargestellten Werte dem ausgewuchteten System und die dunkler dargestellten Werte dem nicht ausgewuchteten System. Es ist deutlich ersichtlich, dass die Amplitude des nicht ausgewuchteten Systems wesentlich höher ist, hier etwa um einen Faktor von 2,7.

Damit wird der theoretische Idealfall gemäß Figur 5 und 6 einer völligen Robustheit gegenüber Schock natürlich nicht erreicht, aber doch eine ganz signifikante Verbesserung. Der Unterschied zur Theorie ist unter anderem auf die Aufhängung mit der Blattfeder 42 sowie die Massenverteilung zurückzuführen. Weitere Verbesserungen sind durch möglichst geringe Gesamtmassen möglich, um einen möglichst kompakten Aktuator 34 verwenden zu können und den Einfluss einer externen mechanischen Beaufschlagung in Rotationsrichtung des Aktuators 34 zu minimieren.

**Patentansprüche**

1. Fokusverstellbare Optik (28) für einen optoelektronischen Sensor (10) mit mindestens einem optischen Element (14), einem Aktuator (34) zum Bewegen des optischen Elements (14) und einem Schwenkarm (30), an dem das optische Element (14) angeordnet ist und an dem der Aktuator (34) angreift, um den Schwenkarm (30) mit dem optischen Element (14) gegen einen Lagerpunkt (32) zu bewegen,

**dadurch gekennzeichnet,**
**dass** der Schwenkarm (30) als zweiseitiger Hebel mit einem ersten Hebelarm zu der einen Seite und einem zweiten Hebelarm zu der anderen Seite des Lagerpunkts (32) ausgebildet ist, dass das optische Element (14) an dem ersten Hebelarm und der Aktuator (34) an dem zweiten Hebelarm angeordnet ist und dass der Schwenkarm (30) ausbalanciert ist.

2. Fokusverstellbare Optik (28) nach Anspruch 1, wobei der Schwenkarm (30) durch Auswahl und Anordnung von Schwenkarm (30), optischem Element (14) und Aktuator (34) ausbalanciert ist.

3. Fokusverstellbare Optik (28) nach Anspruch 1 oder 2, wobei der Schwenkarm (30) durch Hinzufügen oder Entfernen von Material oder gezieltes Verschieben des Lagerpunktes (32), der Position von optischem Element (14) und/oder Aktuator (34) bezüglich des Schwenkarms (30) ausbalanciert ist.

4. Fokusverstellbare Optik (28) nach einem der vorhergehenden Ansprüche, wobei zwischen Aktuator (34) und zweitem Hebelarm eine freie Aufhängung vorgesehen ist.

5. Fokusverstellbare Optik (28) nach einem der vorhergehenden Ansprüche, wobei der Aktuator (34) als Tauchspulaktuator ausgebildet ist.

6. Fokusverstellbare Optik (28) nach einem der vorhergehenden Ansprüche, die einen Positionssensor (44) aufweist, um die jeweilige Auslenkung des optischen Elements (14) zu bestimmen.

7. Fokusverstellbare Optik (28) nach Anspruch 6, die eine Regelung aufweist, um anhand einer Positionsinformation des Positionssensors (44) die Fokuslage des optischen Elements (14) zu regeln.

8. Fokusverstellbare Optik (28) nach einem der vorhergehenden Ansprüche, wobei der Schwenkarm (30) derart gelagert und bezüglich des Aktuators (34) angeordnet ist, dass die Schwenkbewegung senkrecht zu der Längserstreckung des Schwenkarms (30) erfolgt und/oder wobei der Schwenkarm (30) an dem Lagerpunkt (32) mittels einer Blattfeder (42) gelagert ist.

9. Sensor (10) mit einem Lichtempfänger (24) und einer fokusverstellbaren Optik (28) nach einem der vorhergehenden Ansprüche als Empfangsoptik (22) und/oder mit einem Lichtsender (12) und einer fokusverstellbaren Optik (28) nach einem der vorhergehenden Ansprüche als Sendeoptik (14).

**10.** Verfahren zur Fokusverstellung einer Optik (28) eines optoelektronischen Sensors (10), wobei mindestens ein optisches Element (14) mittels eines Aktuators (34) bewegt wird, indem das optische Element (14) auf einem Schwenkarm (30) angeordnet ist, an dem der Aktuator (34) angreift, um den Schwenkarm (30) mit dem optischen Element (14) gegen einen Lagerpunkt (32) zu bewegen,
**dadurch gekennzeichnet,**
**dass** der Schwenkarm (30) als zweiseitiger Hebel mit einem ersten Hebelarm zu der einen Seite und einem zweiten Hebelarm zu der anderen Seite des Lagerpunkts (32) ausgebildet ist, dass das optische Element (14) an dem ersten Hebelarm und der Aktuator (34) an dem zweiten Hebelarm angeordnet ist und dass der Schwenkarm (30) ausbalanciert wird.

Figur 1

Figur 2

Figur 3

Figur 4

## Figur 5

## Figur 6

## Figur 7

Figur 8

**Europäisches Patentamt**
**European Patent Office**
**Office européen des brevets**

# EUROPÄISCHER RECHERCHENBERICHT

Nummer der Anmeldung

EP 19 18 9945

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 198 27 485 A1 (SICK AG [DE]) 23. Dezember 1999 (1999-12-23) | 1,4-10 | INV. G02B7/08 |
| Y | * Spalten 1-5; Abbildungen 1,2 * | 2,3 | G02B7/09 |
| X | DE 10 2006 056955 A1 (THOMSON HOLDING GERMANY GMBH & [DE]) 5. Juni 2008 (2008-06-05) * Absätze [0001], [0002], [0023], [0024]; Abbildungen 1-4 * | 1-10 | |
| X | JP 2008 197354 A (CANON KK) 28. August 2008 (2008-08-28) * Abbildungen 1-7 * | 1-7,9,10 | |
| Y | WO 2011/107113 A1 (WAVELIGHT GMBH [DE]; ROBL GERHARD [DE]) 9. September 2011 (2011-09-09) * Seite 3, Zeile 24 - Seite 4, Zeile 8; Abbildung 1 * | 2,3 | |

RECHERCHIERTE SACHGEBIETE (IPC)

G02B
G01S
G06K

Der vorliegende Recherchenbericht wurde für alle Patentansprüche erstellt

| Recherchenort | Abschlußdatum der Recherche | Prüfer |
|---|---|---|
| München | 17. Januar 2020 | Baur, Christoph |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 18 9945

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2020

| Im Recherchenbericht angeführtes Patentdokument | Datum der Veröffentlichung | Mitglied(er) der Patentfamilie | Datum der Veröffentlichung |
|---|---|---|---|
| DE 19827485 A1 | 23-12-1999 | DE 19827485 A1<br>EP 0973053 A2<br>US 6147820 A | 23-12-1999<br>19-01-2000<br>14-11-2000 |
| DE 102006056955 A1 | 05-06-2008 | DE 102006056955 A1<br>WO 2008065034 A1 | 05-06-2008<br>05-06-2008 |
| JP 2008197354 A | 28-08-2008 | JP 4818148 B2<br>JP 2008197354 A | 16-11-2011<br>28-08-2008 |
| WO 2011107113 A1 | 09-09-2011 | AR 081100 A1<br>AU 2010347608 A1<br>BR 112012022135 A2<br>CA 2791803 A1<br>CN 102834755 A<br>DK 2542934 T3<br>EP 2542934 A1<br>ES 2598481 T3<br>JP 5785197 B2<br>JP 2013521024 A<br>KR 20130028907 A<br>PL 2542934 T3<br>PT 2542934 T<br>RU 2012141541 A<br>TW 201135301 A<br>WO 2011107113 A1 | 13-06-2012<br>04-10-2012<br>25-10-2016<br>09-09-2011<br>19-12-2012<br>24-10-2016<br>09-01-2013<br>27-01-2017<br>24-09-2015<br>10-06-2013<br>20-03-2013<br>31-01-2017<br>25-10-2016<br>10-04-2014<br>16-10-2011<br>09-09-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2498113 A1
- DE 102016112123 A1
- EP 1513094 B1
- EP 1698995 B1
- EP 1698996 B1
- EP 2112540 B1
- EP 2657881 A1